# EUROPEAN PATENT APPLICATION

(11) **EP 0 848 360 A1**
(43) Date of publication of application: **17.06.1998**
(21) Application number: 96309005.5
(22) Date of filing: 11.12.1996
(51) Int. Cl.: G07F 7/10, G07F 19/00

(54) **Electronic funds transfer authentication system**

(71) Applicant: BRITISH TELECOMMUNICATIONS public limited company, London EC1A 7AJ (GB)
(72) Inventor: Rossmann, Alain, Palo Alto, CA 94303 (US)
(74) Representative: Lidbetter, Timothy Guy Edwin

(57) **Abstract**

Electronic Funds Transfer transactions between a mobile telephone user and a trader are handled by the mobile telephone billing system 5. Authentication of the user's account details are carried out by interrogating the user data in the Home Location Register (HLR) 17 of the mobile network. A mobile switching centre 4 communicates over a link 7 with an Electronic Funds Transfer at Point of Sale (EFTPOS) unit 8 located on the trader's premises 9. The user transmits a code to the mobile network using his telephone 1 to request authorisation. The user's location, and hence the trader concerned, may be uniquely identified by identification of a very-short-range radio base station (picocell) 3 to which the mobile telephone is working. The account and transaction data is communicated to the mobile switching centre 4 and thus to the billing system 5 of the cellular radio system, in order to credit and debit the trader's and customer's accounts respectively with the payment required, and record the details of the transaction in order to generate an itemised bill giving details, for each transaction, of the time, trader, and amount debited. Embodiments using for authentication of stored-value cards are also described.

The authorisation data may be used to operate an access-control system.

## Description

This invention relates to electronic funds transfer. Electronic funds transfer is becoming a very popular way of paying for goods and services. In essence, a user generally presents a card carrying the details of the user, either printed or more usually encoded magnetically or in a chip (a so called "smart" card) in order to authorise payment. The authenticity of the card is verified by the trader to whom payment is due by entering the details of the card on a machine connected by a telecommunications link to a central database. The reading may be done by entering the details manually, but is more often done by machine-reading the detail encoded on the card. The authenticity of the card having been verified, the accounts of the trader and customer are credited and debited respectively by the appropriate amounts. (These amounts are not necessarily the same, as the card issuer may take a small service charge, which is either added to the amount deducted from the customer's account or deducted from the amount to be added to the trader's account).

The customer's account may be a "credit" account, wherein amounts are deducted from the customer's account for repayment later, in response to receipt of the bill. Alternatively it may be a "debit" account, wherein the customer initially places money in the account from which the amount can be debited as required. A variation on this is the 'stored value' card, in which the account balance is recorded on the information carrier (the card) itself, and only the authenticity of the card is verified by the exchange of data with the central database.

In order to guard against fraud, in particular the misuse of stolen cards, the customer is frequently asked to identify himself either by providing a signature or a Personal Identity Number (PIN) which is compared with the record in the database to ensure that the person presenting the card is indeed the authorised user.

The present invention allows the use of a mobile telephone, for example one connected to a cellular radio network, to take the place of the traditional plastic credit or debit card. The mobile telephone itself may be used to authorise the transaction.

According to the invention, there is provided an electronic funds transfer authentication system having at least one trader unit connected to a central authorisation unit, each trader unit having means for receiving an authorisation signal from the central authorisation unit; the central authorisation unit being associated with a database for storing data relating to customers of the electronic funds transfer system, and having: means for receiving customer data from a customer unit forming part of a mobile telephone; means for checking the validity of said received data; and means for transmitting authorisation data to the trader unit.

According to a further aspect of the invention there is provided an authentication method for electronic funds transfer, wherein a central authorisation unit receives data, relating to a customer, from a mobile telephone carrying said customer data and an authorisation signal for confirming the validity of said data is transmitted from the central authorisation unit to a trader unit connected thereto.

The customer data may be transmitted directly to the central authorisation unit over the mobile radio network which supports the service. In this case a signal must be transmitted to give the identity of the trader. Alternatively the data may be transmitted from the mobile telephone to a special dedicated radio base station unit within the trader's premises. This would automatically identify the trader by the fact that the mobile telephone is in communication with the dedicated base station. In a typical application, the trader's premises may have a cellular radio "pico cell" base station, within the premises and having a coverage area limited to those premises, which allows cellular radio communication with the cellular network in the normal way, and which positively identifies that any transaction carried out within range of that picocell is related to that trader and no other.

Authorisation data may be returned to the trader unit by way of the cellular network and the customer unit, or alternatively over a fixed connection from the cellular system direct to a trader unit. This fixed connection may be associated with the aforementioned picocell base station.

In one particular arrangement the trader unit is arranged to physically interface with the cellular telephone in order to transfer data between the two effectively.

Within the scope of the invention, the credit or debit value in the customer's account may be stored within the cellular telephone itself, using a stored value processor. This would still require authorisation from the network, but the value in the account would be recorded within the telephone itself. The trader unit would then only require to authenticate the transaction, and to have the appropriate amount credited to its account.

Alternatively, the billing system already in place for the network operator could be utilised, to provide the owner of the mobile telephone with bills which would include transactions carried out using the electronic funds transfer facility.

The service is of particular application to transactions which can take place on the move, or in circumstances where the transaction can take place at any point within a wide area, and it is inconvenient to have to go to a central point for payment, or to have to stop solely to make a payment. For example, when refuelling a motor vehicle, commonly there are a large number of fuel pumps distributed over a large forecourt in order to allow room for vehicles to manoeuvre, and the vehicle owner must pay at a kiosk which may be some distance away. It may be inconvenient for the driver to have to leave his vehicle, particularly if he is carrying valuable goods, or accompanied by small children. Moreover, in order to discourage theft of fuel, fuel station operators discourage drivers from driving their vehicles away from the pumps until they have paid, although this policy prevents any further vehicles from using the pump until the transaction is completed, thereby reducing the rate at which customers can be served. The use of the mobile telephone to authorise payment would remove the need for the customer to present himself at a payment kiosk.

In another application, the collection of tolls for the use of roads can cause considerable congestion as vehicles slow down and stop, drivers search for the correct money, etc. Some toll systems allow season tickets or stored-value cards which can be read electronically thereby allowing some of the traffic to keep moving, reducing congestion and delay. However, this requires that the user first obtains such a card, and this is not practical except for regular users of the road in question. Using the present invention, a mobile phone user could pay a toll whilst in motion by allowing the mobile telephone to transmit its identity and allow the related account to be debited accordingly.

A similar arrangement may also be used to reduce congestion at ticket offices and barriers on public transport systems, by automatically debiting the user's account as he enters and/or leaves the system. The user's authority to travel can be checked by the public transport authority by interrogating the database to determine if payment has indeed been made.

The invention will now be described in further detail, with reference to the accompanying drawings.

Figure 1 shows the main elements of the system in a first embodiment.

Figure 2 shows the elements of the system of a second embodiment.

Figure 3 shows the elements of a system of a third embodiment.

Figure 4 shows the elements of a system of a fourth embodiment.

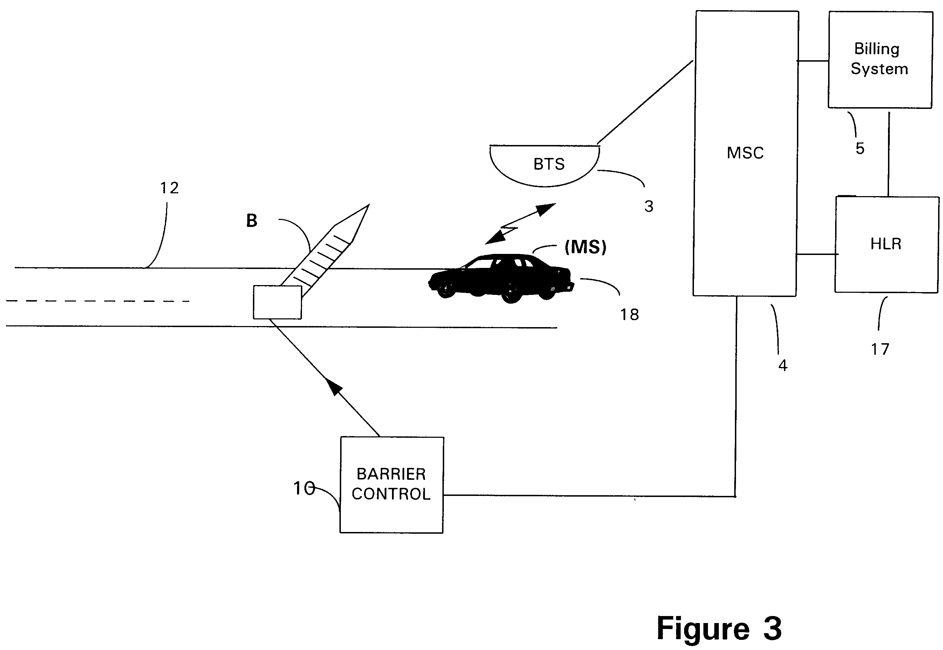

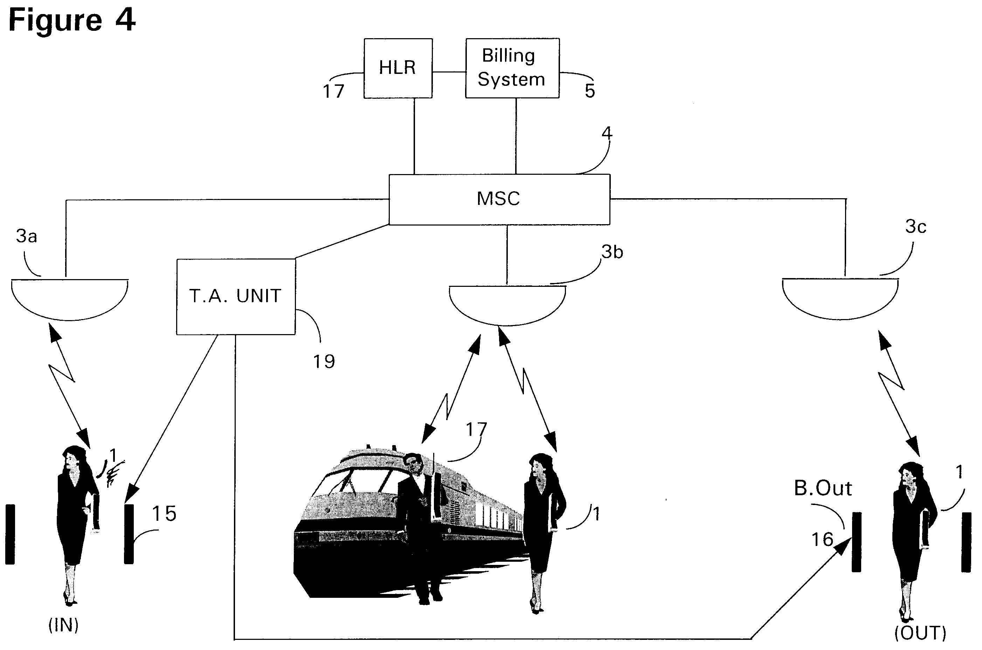

The systems shown in the Figures have a number of features in common. Firstly, each system makes use of a mobile telephone (MS), which may be fitted with a subscriber identity module (SIM) 2 which carries encoded information relating to the user of the mobile telephone. The mobile telephone 1 communicates with the mobile telephone system through fixed base transceiver sites 3, 3a, 3b, 3c etc which communicate with the mobile unit 1 by radio communication, and are connected by fixed land lines to the rest of the cellular radio network, through a mobile switching centre (MSC) 4. Typically, as a mobile unit 1 moves around, it establishes communication with different base transceiver sites (BTS), as illustrated in particular in Figure 4 which shows the same mobile station 1 in communication at different times with three different base transceiver sites 3a, 3b and 3c. The mobile station MS may be hand portable or, as shown in Figure 3, it may be mounted in a vehicle.

The mobile switching centre 4 communicates with a billing system database which monitors call traffic and other charges incurred by the user. Such billing systems are a feature of existing telephone systems, being provided in order to invoice the user for use of the system, e.g. for call charges and standing charges. In embodiments of the present invention, transactions carried out between a trader and the customer (mobile telephone user) are also handled by this billing system. In some embodiments, the trader also has an account in the billing system. There is also an authentication function 17, which carries data relating to the individual users of the system. This function is generally carried out as part of the Home Location Register (HLR) of the mobile network.

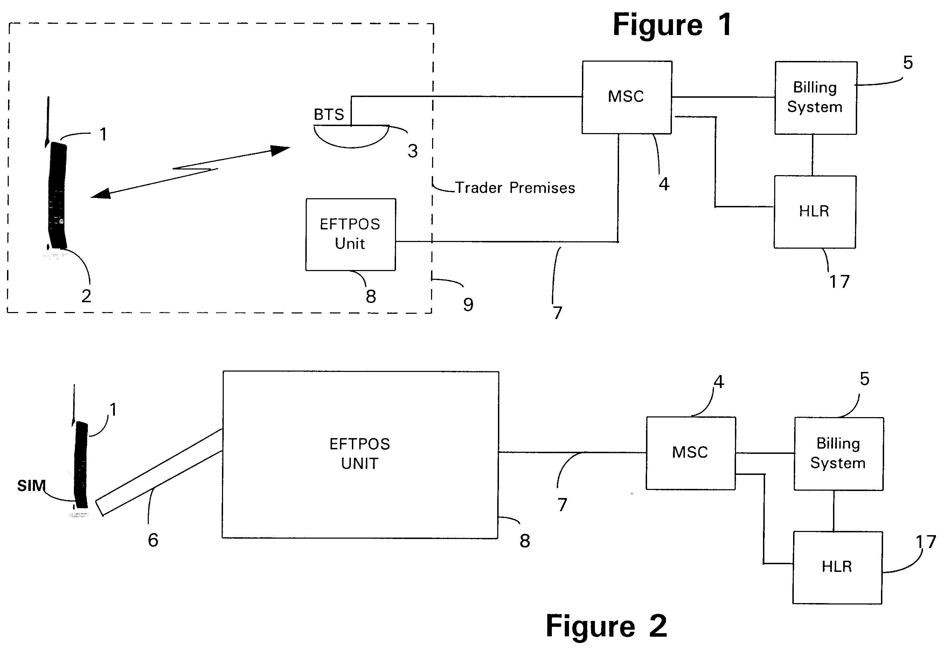

Turning now to the features specific to Figure 1, the mobile switching centre 4 also communicates, either over a fixed link 7 as shown, or through the base transceiver site (BTS) with an Electronic Funds Transfer at Point of Sale (EFTPOS) unit 8 located on the trader's premises 9.

In Figure 2, the arrangement is similar to that in Figure 1, except that the mobile unit 1 communicates with the mobile switching centre 4 through an interface 6 with the EFTPOS unit 8 itself, rather than through a base transceiver site. This embodiment only makes use of the fixed part of the mobile radio network.

In Figure 3 the mobile switching centre MSC communicates with a control unit 10 for controlling a barrier 11 which controls access to a toll road, car park, etc (12).

In Figure 4 the function of the EFTPOS unit is incorporated in a unit 19 operated by a transport authority to control entry and exit barriers 14 and 15 respectively. As well as the user's mobile telephone 1, there is also shown a second mobile handset 16, for use by an official of the transport authority.

Figure 1 shows the system in use in order to pay for goods or services on a trader's premises 9, on which premises there is located a small base transceiver site 3, designed to have a range limited to the trader's premises 9. When a customer wishes to make a transaction with the trader, the trader first enters data into the EFTPOS unit 8, for transmission to the billing system 5. The billing system 5 then transmits to the EFTPOS unit 8 a request for the customer's account details, including details of the amount to be invoiced. If the customer wishes to use his mobile telephone 1 to authorise this payment, he enters a code on the telephone 1, and the code is transmitted through the mobile telephone system 3, 4. The mobile switching centre 4 calls up the customer's data from the HLR 17, and if the code is valid, identifies the base transceiver site 3 on which the mobile unit 1 is operating, and matches this with the trader on whose premises 9 the base transceiver site 3 is located. The mobile switching centre 4 transmits an authorisation code to the trader's EFTPOS unit 8 either over a fixed link 7 as shown, or alternatively by way of the BTS 3 and a radio interface. This authorisation code confirms to the trader that payment has been authorised. The account and transaction data is communicated to the mobile switching centre 4 and thus to the billing system 5 of the cellular radio system, in order to credit and debit the trader's and customer's accounts respectively with the payment required, and record the details of the transaction in order to generate an itemised bill giving details, for each transaction, of the time, trader, and amount debited.

If the mobile telephone 1 is the only one currently in communication with a BTS 3 specific to the trader, so that the trader's request for account details can be uniquely matched to a single customer, the request for account details may be simplified to a request for authorisation of the payment, transmitted directly to the user's mobile telephone 1 by way of the BTS 3.

If the mobile telephone 1 is in communication with a base transceiver site BTS 3 which is not specific to the trader, for example one which covers a rather larger area than the trader's premises 9, the mobile user must transmit a code identifying the trader to whom payment is to made, so that the mobile switching centre 4 can identify the EFTPOS unit 8 with which it is to communicate.

In the arrangement shown in Figure 2 the mobile telephone 1 communicates directly with the EFTPOS unit 8, rather than over a radio interface. The EFTPOS unit 8 communicates, over a fixed link 7 or a radio interface, with the mobile switching centre MSC 4 in order to carry out the transaction. The interface 6 between the mobile unit MS 1 and EFTPOS unit 8 may be by any suitable means compatible with the mobile unit in question. For example, an acoustic coupling to the earpiece and mouthpiece of the mobile unit may be used.

In both Figures 1 and 2 the mobile unit is shown illustratively as having a subscriber identity module (SIM) 2 which carries the relevant user data. The SIM 2 therefore carries the identity of the customer which is used in order to authorise debiting of the customer's account in the billing system 5. The data may be held permanently on the mobile unit 1 instead of on a SIM 2.

In another arrangement, the SIM 2 or mobile telephone 1 may carry a stored value, which is updated by means of the EFTPOS unit 8, either directly, or through the medium of the cellular network if physical connection 6 between the mobile telephone 1 and EFTPOS unit 8 is not possible. Similarly the EFTPOS unit 8 may include a stored value component which is credited as the customer's account is debited, the authenticity of the card having been confirmed by communication between the EFTPOS unit 8 and the HLR 17.

Figure 3 shows a modified system in which the trader's EFTPOS unit 8 is replaced by a barrier control unit 10. As a user's vehicle 18 approaches the barrier 11, which controls entrance to a toll road, car park or the like (12), the user transmits a special predetermined code on his mobile telephone 1, which code is transmitted by way of the base transceiver site 3 to the mobile switching centre 4, where authorisation is confirmed by the HLR 17 and the account in the billing system 5 suitably debited. Provided that the system authorises payment, the mobile switching centre 4 transmits a signal to the barrier control 10 in order to raise the barrier 11 and allow the user 18 to enter the controlled area.

A further development of this system, can be used in circumstances when the amount due for payment is dependent on two linked events, for example entry and exit times at a car park or, as illustrated in Figure 4, start and finish locations (15, 16) of a journey by public transport. As shown in Figure 4 a user, on entering the transport operator's premises, uses her mobile unit 1 to transmit a signal requesting authority to travel. This signal is transmitted by way of a base transceiver site 3a associated with the entry barrier 15, and the mobile switching centre 4 to the transport authority's control unit 19 which transmits a signal to the barrier equipment 15 to allow the user to enter the system, and records the time and location of entry. On exit from the system, by way of a second barrier 16, controlled by a second base transceiver site 3, the user again uses her mobile unit 1 to transmit a code by way of the base transceiver site 3c and the mobile switching centre 4, to the transport authority unit 19 which transmits a signal to barrier control 16 to allow exit from the transport authority's system. The transport authority unit 19 uses the data on times and places of entry to, and exit from, the system to calculate the fare to be paid, which is then automatically debited from the customer's account in the billing system 5 or the stored value in the mobile unit 1.

As this system dispenses with the use of tickets or other physical authorities to travel, it is necessary to ensure that a user found traveling on the system has authority to travel. Therefore, whilst in transit, a transport authority official may, by use of his own mobile unit 17, communicate with the transport authority unit 19 way of the cellular radio system, typically by means of a further base transceiver site 3b, to check that the user indeed has authority to be on the transport authority's premises.

The official's unit 17 interfaces with the user's unit 1 in order to identify the user record which is to be checked in the unit 19. This may be done by a physical or acoustic connection between them or, as shown, through the cellular radio system (3b, 4).

In an alternative arrangement, the user's own mobile telephone 1 may be used to obtain confirmation from the transport authority's control unit 19 that she has authority to travel.

Various other uses for the system may be envisaged. For example the embodiment of Figure 4 may be used to control toll roads and car parks in which the payment is not a flat rate, but is paid on exit according to the distance that has been travelled since entry.

## Claims

1. Electronic funds transfer authentication system having at least one trader unit connected to a central authorisation unit, each trader unit having means for receiving an authorisation signal from the central authorisation unit;
the central authorisation unit being associated with a database for storing data relating to customers of the electronic funds transfer system, and having:
means for receiving customer data from a customer unit forming part of a mobile telephone;
means for checking the validity of said received data; and
means for transmitting authorisation data to the trader unit.

2. A system according to claim 1, wherein the customer data is transmitted from the mobile telephone by way of a mobile telephone network.

3. A system according to claim 2, further comprising means for transmitting the identity of the trader unit from the mobile telephone to the central authorisation unit.

4. A system according to claim 2, comprising a trader-specific cellular radio base station, the central authorisation unit being arranged to identify the trader in accordance with the serving base station.

5. A system according to any preceding claim, wherein the system comprises means for transmitting the authentication data by way of the cellular telephone network and the customer unit.

6. A trader unit for use in the system of claim 4 or 5, comprising means for coupling to a mobile telephone, such that data may be exchanged between the mobile telephone and the trader unit.

7. A system according to any of claims 1 to 4, comprising means for transmitting the authentication data over a dedicated link between the central authorisation unit and the trader unit.

8. A system according to any preceding claim wherein the customer unit includes a stored value database.

9. A system according to any of claims 1 to 7, wherein the customer database in the central authorisation unit comprises data relating to customer accounts details, updatable by means of the data transmitted over the mobile radio system.

10. An authentication method for electronic funds transfer, wherein a central authorisation unit receives data, relating to a customer, from a mobile telephone carrying said customer data and an authorisation signal for confirming the validity of said data is transmitted from the central authorisation unit to a trader unit connected thereto.

11. A method according to claim 10, wherein the customer data is transmitted from the customer's mobile telephone to the central unit over a cellular telephone network, together with identification of the trader.

12. A method according to claim 10, wherein the customer data is transmitted to the trader unit for onward transmission to the central unit.

13. A method according to any of claims 10, 11 and 12, wherein the authentication data is returned to the trader unit by way of the customer's mobile telephone.

14. A method according to any of claim 10, 11 or 12, wherein the authentication data is transmitted directly to the trader unit over a dedicated connection.

15. A method according to any of claims 10 to 14, wherein the customer unit comprises a stored value unit, which is updated in response to signals conveyed to the customer unit during the authentication process.

16. A method according to any of claims 10 to 14, wherein the customer account information is stored in the central unit, and the authentication process includes updating the customer record accordingly.
